# EUROPEAN PATENT APPLICATION

(11) **EP 0 587 928 A1**
(43) Date of publication of application: **23.03.1994**
(21) Application number: 92115763.2
(22) Date of filing: 15.09.1992
(51) Int. Cl.: H02J 7/00

(54) **Battery charger**

(71) Applicant: SANKI INDUSTRIAL CO., Ltd., Yokohama City (JP)
(72) Inventor: Umezawa, Hiroji, Yokohama-City (JP)
(74) Representative: Klunker . Schmitt-Nilson . Hirsch

(57) **Abstract**

A battery charger of the present invention has one or more battery-inserting portions for receiving batteries to be charged, a charging means for charging the batteries inserted in the battery-inserting portion, and a direct-current input terminal for inputting an external direct current as a charging current into the charging means. In use, the battery charger is connected at the input terminal with an AC adapter, through which it is supplied with a direct current for charging the batteries. Since the battery charger has no rectifying circuit portions therein, it is safe and has a simplified structure.

## Description

### BACKGROUND OF THE INVENTION

### Field of the Invention

The present invention relates to a battery charger for charging batteries utilized as a power source for portable electronic devices and the like.

### Prior Art Description

In the field of portable electronic devices such as personal computers or the like, rechargeable batteries have being widely utilized as a power source thereof. Typically, electronic devices are provided with an exclusive battery charger for recharging batteries of the devices. As is well known, the battery charger is generally comprised by a rectifying circuit for converting an alternating current into a direct current, a charing circuit for charing batteries with the resultant direct current, and a controlling circuit for controlling charging operation. Since the battery charger is applied with a 100-volt or 220-volt alternating current, it must be designed to meet settled safety standards and to have heat dissipating plates arranged so as to effectively dissipate heat generated from the rectifying circuit portions.

A typical electronic device of the portable type having batteries as a power source is associated with an AC adapter, through which a commercial alternating current of 100-volt or 220-volt is converted into a direct current. Thus, where a commercial alternating current is available, the direct current from the AC adapter is supplied to the electronic device as a driving power thereof instead of the batteries.

### SUMMARY OF THE INVENTION

The present invention is conceived based on the fact that portable electronic devices are usually associated with an AC adapter. An object of the present invention is to realize a safe and simplified battery charger for an electronic device which is capable of charging batteries with utilizing an AC adapter associated to the device.

In order to achieve the above and other objects, according to the present invention, a battery charger is provided which comprises at least one battery-inserting portion, a charging means for charging a battery inserted in the battery-inserting portion, and a direct-current input terminal for inputting an external direct current as a charing current into the charging circuit. The direct-current input terminal is typically a receptacle for the output plug of an AC adapter associated to an electronic device having the batteries to be charged.

In a preferred embodiment, the battery charger has the battery-inserting portion releasably attached to the casing of the battery charger, so that a battery-inserting portion adaptable for a battery to be charged can be selected and attached to the battery charger, whereby the battery charger is commonly utilized for charging batteries of different types.

### BRIEF DESCRIPTION OF THE DRAWINGS

The above and other objects and advantages of the present invention will be more apparent from reading the following description in conjunction with the attached drawings, wherein:
Figure 1 is a perspective view of an embodiment of a battery charger according to the present invention;
Figure 2 is a plan view of the battery charger of Figure 1;
Figure 3 is a side view of the battery charger of Figure 1;
Figure 4 is a front view of the battery charger of Figure 1;
Figure 5 is a rear-side view of the battery charger of Figure 1; and,
Figure 6 is a schematic block diagram showing a circuit structure of the battery charger of Figure 1.

### PREFERRED EMBODIMENT OF THE INVENTION

While the present invention will be described with reference to a preferred embodiment, it is understood that the present invention is not limited to the embodiment. On the contrary, it is intended to cover all alternatives, modifications and equivalents as may be included in the present invention defined by the attached claims.

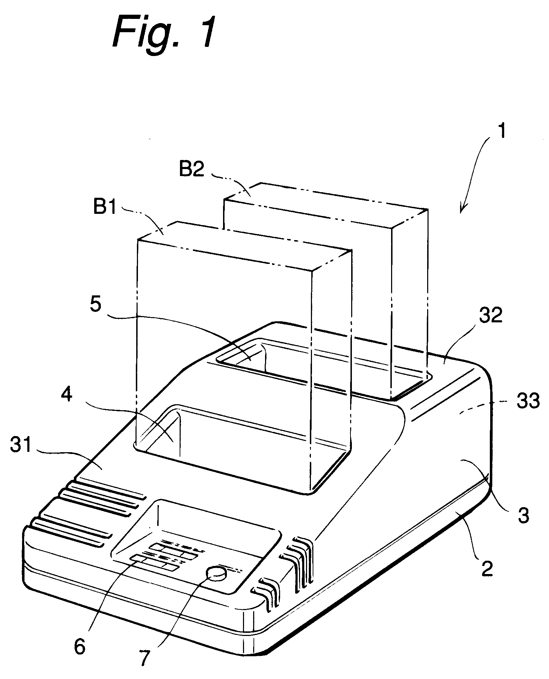

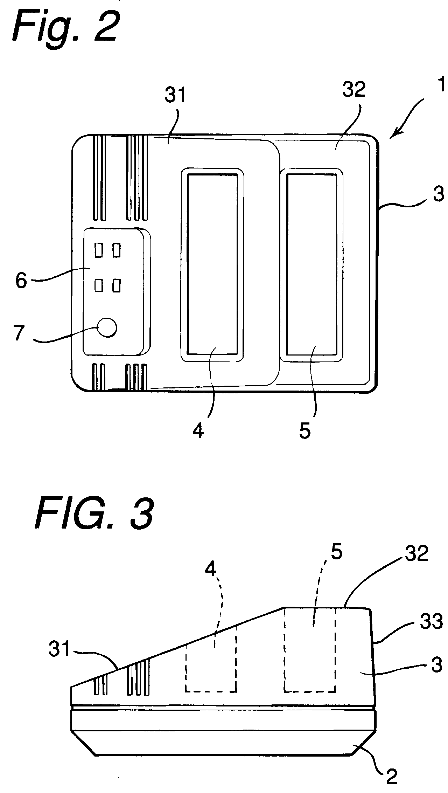

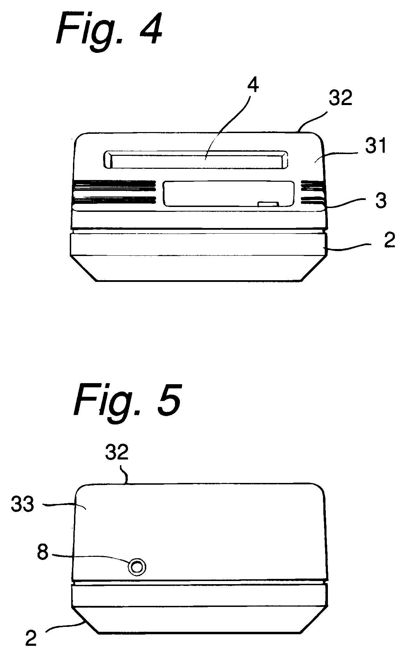

Figures 1 to 5 illustrate the configuration of a battery charger according to the present invention. As shown in these drawings, the battery charger 1 has a lower casing 2 and an upper casing 3 attached with each other, in which respective portions as mentioned hereinafter are accomodated. The upper casing 3 has an outer surface which is formed at the front side with a slope portion 31 and at the rear side with a flat portion 32 continued to the slope portion 31. The slope portion 31 and the flat portion 32 are formed with battery-inserting portions 4 and 5 for accepting rechargeable batteries B1 and B2 of rectangular shape perpendicularly from the upper side, respectively.

The slope portion 31 has a portion in front of the battery-inserting portion 4 on which are arranged LED's 6 (61, 62, 63, 64) for indicating operational modes of the charger and a refreshing switch 7 for discharging batteries inserted into the battery-inserting portions 4 and 5. A rear side 33 of the upper casing 3 is provided with a direct-current input terminal 8 for introducing a plug of an AC adapter (not shown). The AC adapter is one that is associated to an electronic device having batteries B1, B2 to be charged.

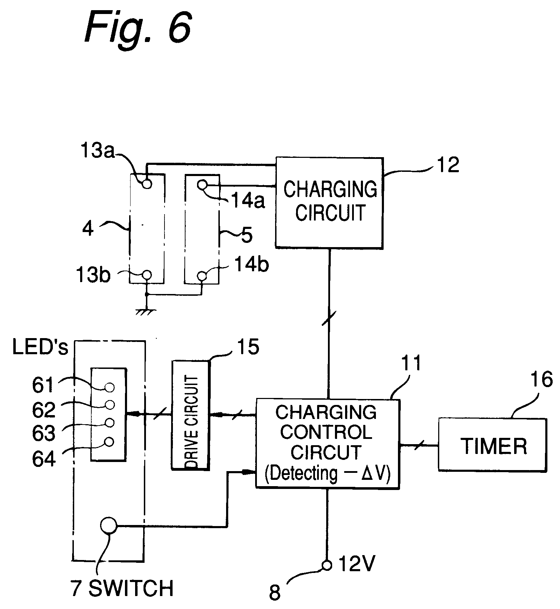

Figure 6 illustrates a circuit configuration of the battery charger 1. As shown in this figure, the battery charger 1 has a charging control circuit 11 and a charging circuit 12. The charging control circuit 11 receives a direct current rating 12-volt via the direct-current input terminal 8 and supplies it to the charging circuit 12 for charging. The charging circuit 12 has outputs connected to load-side terminals 13a, 13b and 14a, 14b which are disposed on the bottom surface of the battery-inserting portions 4 and 5. The charging control circuit 11 controls to drive the LED's 6 via a drive circuit 15 so that the LED's 6 indicate operational modes of the battery charger 1. For example, the LED's emitting different colors are selected to drive, and/or the emitting manner of LED's is changed, whereby the operational modes including rapid charging, discharging, tricle charging and the like can be indicated by the LED's.

When received a signal generated by depressing the switch 7, the charging control circuit 11 controls to discharge batteries inserted into the battery-inserting portions 4 and 5. The charging control circuit 11 is also connected to a timer 16, and controls the charging period of time according to the time counting of the timer 16.

The charging operation is carried out as follows. Firstly, one or both of the Batteries B1 and B2 are inserted into one or both of the battery-inserting portions 4 and 5. Next, the plug of an AC adapter is inserted into the terminal 8, and the AC adapter is conneted to a commercial alternating current of 100-volt or 220-volt. Thus, the charging of the batteries inserted into the battery-inserting portions 4, 5 commences.

While the two battery-inserting portions 4, 5 are provided according to the present embodiment, one of them may be eliminated, or three or more of such portions may be provided. In addition, less or more of LED's may be arranged to indicate the operational modes of the battery charger 1. The charging control circuit 11 and the charging circuit 12 can be those of the conventional types, so that no detailed description thereof is given here.

As mentioned above, the battery charger of the present invention is provided with the direct-current input terminal for receiving a direct current, and utilizes an AC adapter associated to an electronic device for charing batteries of the device. Therefore, according to the present invention, it is not necessary to provide the battery charger with a rectifying circuit portions for rectifying an alternating current of high voltage to produce a direct current for charging. As a result, the battery charger has no portions applied with a high voltage or portions dissipating a large amount of heat, so that there is no need to consider a fire occurrance or heat dissipation from those portions. Thus, according to the present invention, a safe battery charger of simplified structure can be obtained.

## Claims

1. A battery charger comprising at least one battery-inserting portion for receiving a battery to be charged, a charging means for charging said battery inserted in said battery-inserting portion, and a direct-current input terminal for inputting an external direct current as a charging current into said charging means.

2. A battery charger as set forth in claim 1, wherein said direct-current input terminal is a receptacle for the output plug of an AC adapter.

3. A batterty charger as set forth in claim 1 or 2, wherein said battery-inserting portion is releasably attached to a casing of said battery charger.

4. A battery charger as set forth in any one of claims 1 to 3, further comprising a means for indicating operational modes of said battery charger.
